**Europäisches Patentamt**

(19) **European Patent Office**

**Office européen des brevets**

(11) Publication number: **0 058 570**

**A1**

(12) # EUROPEAN PATENT APPLICATION

(21) Application number: **82300805.7**

(22) Date of filing: **17.02.82**

(51) Int. Cl.³: **A 01 G 5/04**

(30) Priority: **18.02.81 GB 8105077**

(43) Date of publication of application:
**25.08.82 Bulletin 82/34**

(84) Designated Contracting States:
**AT BE CH DE FR GB IT LI LU NL SE**

(71) Applicant: **Hevey, John Harold and Mival, John Russell trading as FLORATRAK Unit 14 Redcross Street Rochdale OL12 OPR Lancashire(GB)**

(72) Inventor: **Hevey, John Harold
Firswood Lathom Road
Bickerstaffe, Near Ormskirk Lancashire(GB)**

(72) Inventor: **Mival, John Russell
32 Rhuddlan Road
Rhyl Clwyd(GB)**

(72) Inventor: **Russell, Derek
36 Hesketh Road
Southport Merseyside(GB)**

(74) Representative: **Leale, Robin George et al,
FRANK B. DEHN & CO. Imperial House 15-19 Kingsway
London WC2B 6UZ(GB)**

(54) **Flower holders.**

(57) A trough unit adapted to receive self-supporting water-absorbent material for the insertion of flower stems, which trough unit is provided with means 1, 2 for connecting it in adjoining relationship to at least one other and similar trough unit to form two adjacent trough portions of a composite flower holder.

FIG.1.

Croydon Printing Company Ltd.

"Flower Holders"

This invention relates to flower holders for use in making up floral arrangements of various shapes and sizes, particularly but not exclusively for making up funeral tributes. Flower holders for this purpose are known which comprise a trough of the desired shape adapted to house a self-supporting water-absorbent material, for example the open-cell plastics foam material sold under the trade name "BLOOMFIX", into which flower stems are inserted to make up the arrangement.

It is a disadvantage of these known holders that they are only available already made up in specific shapes and sizes, for example as rings or crosses, which means that the florist has to stock a large number of holders of different shapes and sizes, ready for use, and even then may not be able to keep a sufficiently comprehensive stock to be sure of satisfying all of his customers needs. Furthermore the need for the manufacturer to keep and employ a large number of different moulds, one for each of the different shapes and sizes of holder, makes for an expensive product.

With the object of overcoming or at least reducing these problems, the general concept of the present invention is to provide a range of interconnectible trough units of simple shapes from which a florist can make up a very wide variety of different sizes and shapes of flower holder, thus greatly reducing the volume of stock which the florist needs to carry whilst at the same time enabling him to substantially increase the range of shapes and sizes of floral arrangement that he can provide, and at the same time making the product cheaper because of the greater simplicity and the reduced number of the moulds employed by the manufacturer.

Thus according to the present invention there is provided a trough unit adapted to receive self-supporting water-absorbent material for the insertion of flower stems, which trough unit is provided with means for connecting it in adjoining relationship to at least one other and similar trough unit to form two adjacent trough portions of a composite flower holder.

The said connecting means may be of any convenient kind. Preferably such means comprises interlocking means integral with the body of the trough unit, for example forming part of a one-piece trough unit moulding. In a particularly preferred embodiment such integral connecting means comprises interlocking key-like protrusions and complementary slots formed on the outside walls of the unit, preferably of dovetail formation in transverse section and preferably tapered so as to define their fully interlocking relative positions.

It is however by no means essential that the connecting means should be integral with the trough units of the invention as separate connectors may readily be employed, for example in the form of suitable clips secured to the trough unit and engageable over adjoining side walls of adjacent trough units, or fasteners secured to the unit and insertable through mating holes in such side walls.

Trough units according to the invention may be provided in various simple shapes, but we have found that an at least adequate range of holders for general use can be made up from a basic range of straight trough units of four different lengths of 2", 4", 8" and 12", together with curved units of three different configurations so shaped as to make up, respectively, a 12" diameter circle from four such units of one configuration, a 16" diameter circle from four such units of a second configuration, and a 16" diameter circle from eight such units of a third configuration, all of such units being 2" wide as is customary in the art.

In order to increase the range of different holders available it is desirable that at least some trough units of the invention should be connectible to other such units at various different locations around the perimeter of the unit, for example at locations along the sides of a straight unit as well as at its ends. Preferably therefore at least some trough units according to the invention are adapted to be connected to other units at a multiplicity of different locations around their perimeters, either by providing the said connecting means at such locations or by enabling the units to be interconnected by separate connecting clips or other connecting means at such multiple locations.

To enable two trough units to be interconnected at a variety of angles to one another, a hinged connector may be provided having two hingedly interconnected arms each adapted to be connected to a respective trough unit in any of the ways already discussed above, for example by being formed for interlocking connection with integral connecting means of the trough unit walls, or by clipping over the latter. A hinge lock may then be provided to hold the two interconnected trough units at a desired angle to one another. Such a lock may take the form of a flexible strip connectible between the two units across the open side of the hinge, again being connectible to the units in any of the ways already mentioned.

The units may be formed with internal strengthening ribs or webs which also serve for stabilising engagement with the water-absorbent material to be housed therein in use, and may also have suitable studs or grommets fitted in their floors and projecting below the same to prevent slipping of the wreaths or other flower arrangements over a smooth surface.

The trough units of the invention may be made of any suitable material such as moulded plastics or pressed metal but are preferably of high impact polystyrene and may be formed by injection moulding or vacuum forming techniques depending on their size.

Some embodiments of the invention will now be described by way of example and with reference to the accompanying diagrammatic drawings, in which:-

Figure 1 is a perspective view of an 8" trough unit according to the invention;

Figure 2 is a similar view of a 2" unit;

Figure 3 is a transverse cross-sectional view of the unit of Figure 1, when in use;

Figure 4 illustrates the manner of end-to-end interconnection of two units as shown in Figure 1;

Figure 5 is a cross-sectional view of the completed interconnection;

Figure 6 is a plan view of a curved trough unit for making a circular wreath;

Figure 7 illustrates a separate clip for interconnecting two units at right angles;

Figure 8 illustrates the construction and manner of use of a hinged connector assembly;

Figure 9 is a plan view of a three-way connector clip;

Figure 10 illustrates, in plan view, a four-way interconnection of two curved units and two straight units;

Figure 11 is a perspective view of a handle for picking up a flower holder; and

Figures 12 to 15 show some examples of flower holders made up of trough units according to the invention.

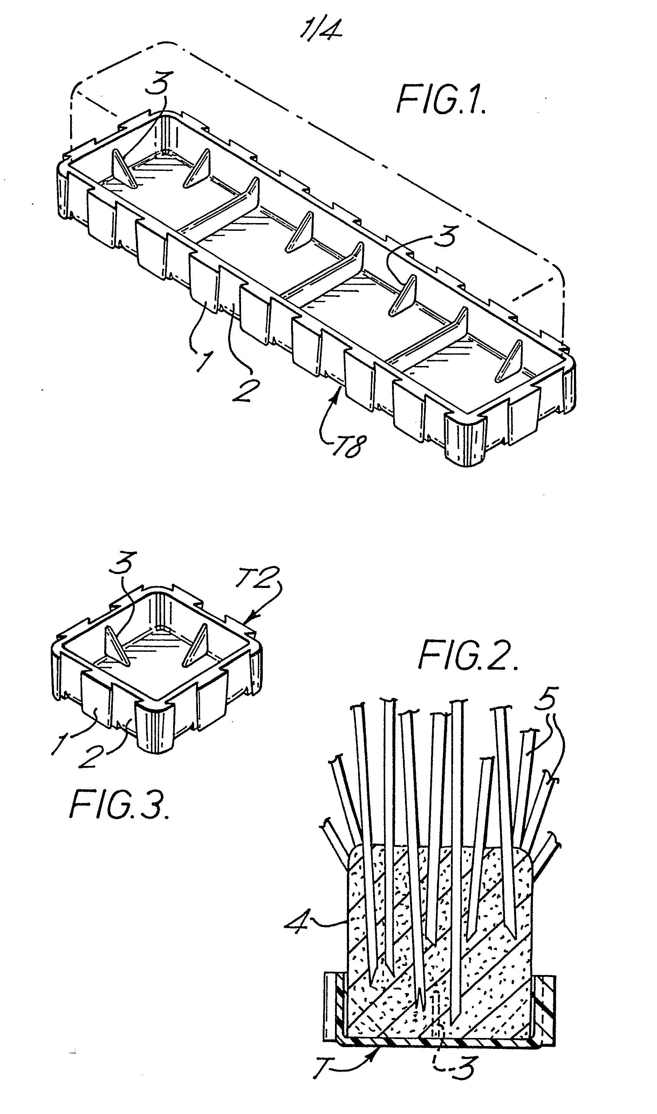

Referring first to Figure 1, a rectangular trough unit T8 moulded from polystyrene is 8" long and 2" wide and has its external vertical wall surface formed to provide connecting means in the form of a continuous series of key-like protrusions 1 and slots 2 of dovetail shape in transverse cross-section, the protrusions being slightly tapered downwardly so as to make a tight fit in the slots in their fully interengaged positions when two such units are interconnected. Strengthening ribs 3 are provided to stabilise the unit.

Figure 2 shows such a block 4 of water-absorbent material received in the trough. It will be noted that the block extends well above the top of the trough so that flower stalks 5 can be inserted in the sides of the block as well as in its top. The width (and length) block 4 is such that it is a comparatively loose fit in the trough so as to avoid distortion of the block during its insertion. The block is held in the trough by adhesive.

Figure 3 shows a 2" by 2" trough T2 similar in other respects to that of Figure 1.

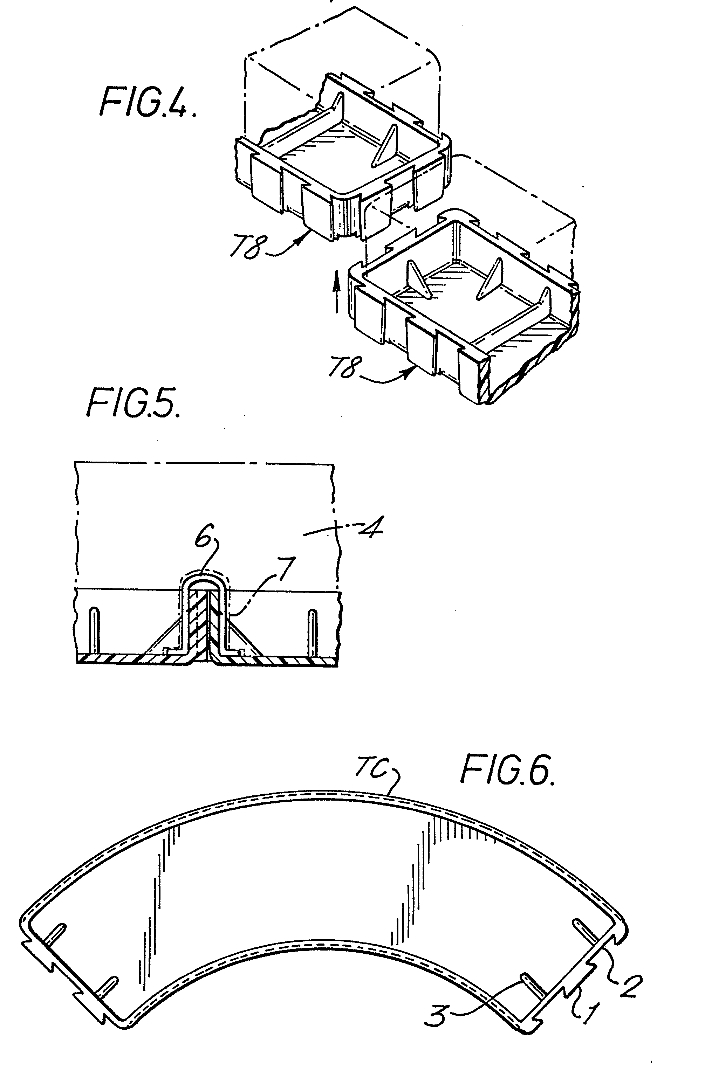

Figure 4 illustrates the manner of interconnecting two identical 8" troughs T8 end to end, by relative vertical movement between that end of one trough which has two protrusions 1 and one slot 2 and the other end of the other trough which has one protrusion and two slots.

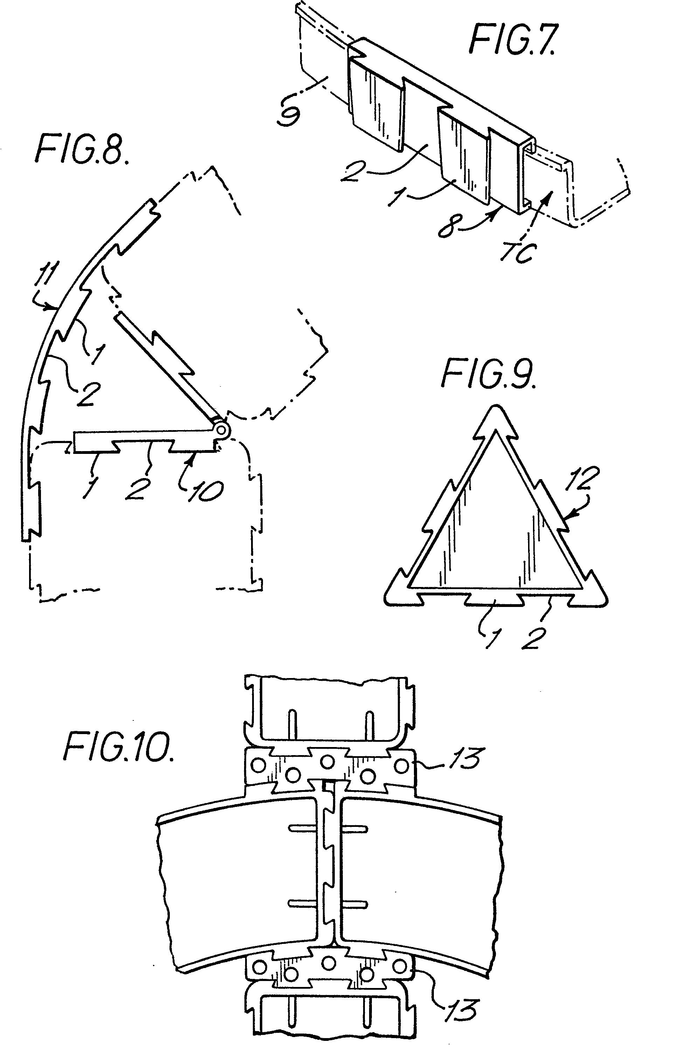

The troughs will normally be supplied to the customer singly, i.e. unconnected, except where particularly long lengths of holder are required, for example for forming the central leg of a cross, in which case a number of units may be interconnected by the supplier in a more permanent manner illustrated in Figure 5, in which the interconnection already described above is reinforced by a resilient clip 6 applied before a long block of water-absorbent material 4 is inserted to span the interconnections as shown, the underside of the block being slotted at 7 to fit freely over the clip and the end walls of the troughs. Adhesive may also be used between the ends of the troughs in the Figure 5 arrangement.

Figure 6 shows a curved trough unit TC of 6" external radius formed with protrusions 1 and slots 2 only at its ends. Obviously four such units may be interconnected to make a circular flower holder of 12" external diameter.

Figure 7 shows a clip-on connector 8, particularly intended for mounting on the side wall 9 of a curved trough unit TC of the kind shown in Figure 6 if it is desired to connect the latter to another unit at a point along one of its plain side walls.

Figure 8 shows a hinged connector 10 which may be employed to interconnect two trough units at a variety of angles, in conjunction with a hinge lock 11 in the form of a flexible strip which is connected to the respective units to span the open side of the hinge. Obviously these items may be formed with more dovetail protrusions 1 and slots 2 than illustrated, if desired.

Figure 9 shows a triangular three-way connector 12 which may be used, for example, to interconnect three straight trough units in a spoke-like configuration.

An obvious modification of the connectors 10 and 12 of Figures 8 and 9 is the somewhat flexible double-sided connector 13 shown in Figure 10 which may be used to interconnect straight and curved trough units. The curved units of Figure 10 differ from that of Figure 6 in having a small number of protrusions 1 and slots 2 at the ends of their side walls, in addition to those in their end walls, to permit transverse interconnections as shown.

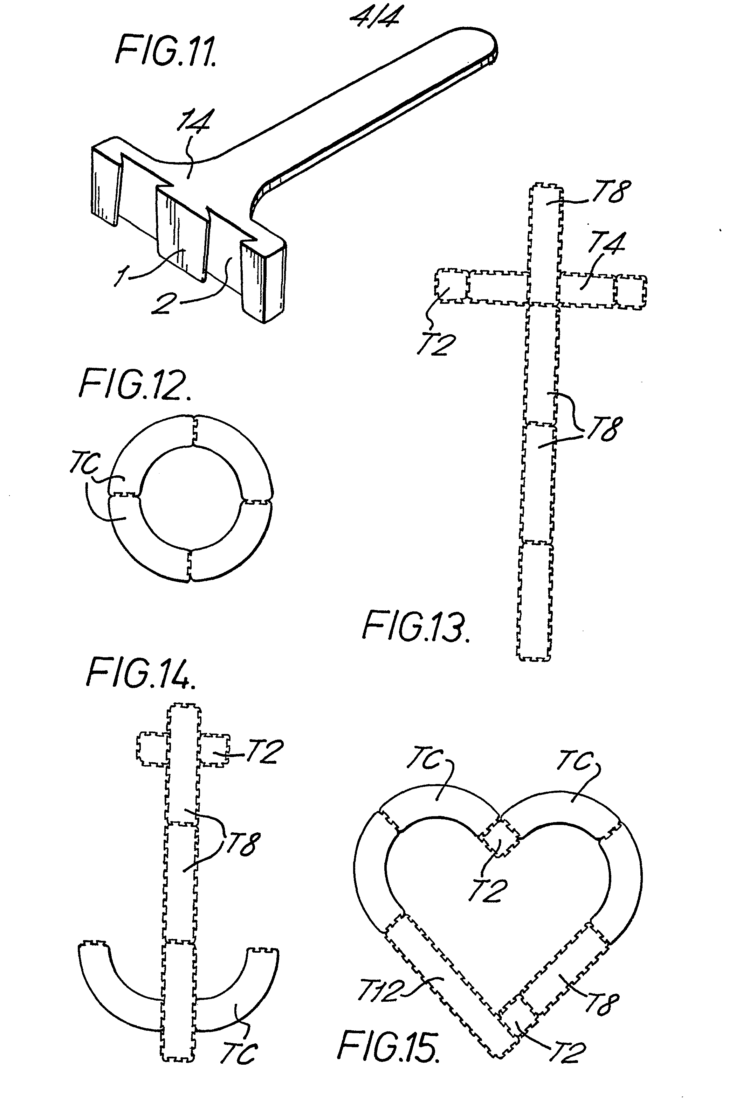

Figure 11 shows a handle having its head 14 formed with protrusions 1 and slots 2, to enable a flower holder made up of units according to the invention to be lifted and carried without disturbing the flower arrangement.

Lastly Figures 12 to 15 show just a few of the multiplicity of different shapes of flower holder which may be formed by means of 2" to 12" units T2 to T12, and curved units TC.

CLAIMS:

1.   A trough unit adapted to receive self-supporting water-absorbent material for the insertion of flower stems, which trough unit is provided with means for connecting it in adjoining relationship to at least one other and similar trough unit to form two adjacent trough portions of a composite flower holder.

2.   A trough unit as claimed in claim 1, wherein said connecting means comprises interlocking means integral with the body of the unit.

3.   A trough unit as claimed in claim 2, wherein said interlocking connecting means are part of a one-piece trough  unit moulding.

4. .  A trough unit as claimed in claim 2 or 3, wherein said interlocking connecting means comprises interlocking protrusions and slots on the outside wall of the unit.

5.   A trough unit as claimed in claim 4, wherein said protrusions and slots are of dovetail formation in transverse cross-section.

6.   A trough unit as claimed in claim 5, wherein said protrusions and slots are tapered longitudinally.

7.   A trough unit as claimed in any preceding claim, wherein said connecting means are provided at spaced locations all around the periphery of the unit.

8.   A trough unit as claimed in any of claims 1 to 6, which unit is elongate and has said connecting means only in the regions of its opposite ends.

9.    A trough unit as claimed in any of the preceding claims, having a block of said water-absorbent material secured therein and extending substantially above the top of the trough.

10.   A flower holder comprising a plurality of trough units as claimed in any preceding claim interlocked by said connecting means thereof.

11.   A flower holder as claimed in claim 10, wherein said trough units are also joined together by adhesive and/or by separate clips.

0058570

1/4

FIG.1.

FIG.2.

FIG.3.

FIG.4.

2/4

T8

T8

FIG.5.

6

7

4

FIG.6.

TC

3

2

1

**FIG.7.**

**FIG.8.**

**FIG.9.**

**FIG.10.**

0058570

**FIG.11.**

4/4

14

1

2

**FIG.12.**

TC

**FIG.13.**

T8

T4

T2

T8

**FIG.14.**

T2

T8

TC

TC

TC

T2

T12

T8

**FIG.15.**

T2

**European Patent Office**

**EUROPEAN SEARCH REPORT**

Application number

EP 82 30 0805

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 394 993 (GAUTIER)<br><br>*The whole document*<br><br>--- | 1,2,3,<br>4,5,7 | A 01 G  5/04 |
| X | US-A-2 849 836 (FORSTER)<br><br>*The whole document*<br><br>----- | 1,2,3,<br>4,7,11 | |

| | TECHNICAL FIELDS SEARCHED (Int. Cl. ³) |
|---|---|
| | A 01 G  5/00<br>A 01 G  5/04<br>A 01 G  5/06 |

The present search report has been drawn up for all claims

| Place of search | Date of completion of the search | Examiner |
|---|---|---|
| THE HAGUE | 25-05-1982 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82